# EUROPEAN PATENT APPLICATION

(11) **EP 4 804 160 A1**
(43) Date of publication of application: **09.09.2026**
(21) Application number: 25161708.0
(22) Date of filing: 04.03.2025
(51) Int. Cl.: G08G 1/0967, F02N 11/08, G08G 1/0968, B60W 30/18

(54) **TRAFFIC SYSTEM TO OPTIMISE THE START-STOP BEHAVIOUS OF BLOCKED VEHICLES**

(71) Applicant: Valeo Comfort and Driving Assistance, 94000 Créteil (FR)
(72) Inventor: ENGELHARDT, Tobias, 94000 Créteil (FR); STAEDTLER, Lea, 94000 Créteil (FR)
(74) Representative: Delaval, Guillaume Laurent

(57) **Abstract**

The disclosure notably relates to a method implemented by vehicles each equipped with a respective traffic system and optionally a respective start-stop system. The vehicles are stopped due to a blockage. The method comprises, by each vehicle, detecting S10 the blockage. The method comprises, by a determined first vehicle, determining S31 that the blockage is removed, and sending S32, to each other vehicle, a message indicating that the blockage is removed. The determined first vehicle may also optionally communicate the type of blockage to other vehicles. The method comprises, for each given vehicle receiving the message, performing at least one of warning S41 a driver of the given vehicle that the blockage is removed and, when equipped with a start-stop system, starting S42 the start-stop system of the given vehicle. Such a method improves vehicle departure once the blockage has been removed.

## Description

### TECHNICAL FIELD

The disclosure relates to the field of vehicles equipped with traffic systems, and more specifically to a method, system and program for starting such vehicles after a blockage.

### BACKGROUND

In situations where traffic is obstructed due to events such as accidents or prolonged red lights, drivers currently rely on waiting for the blockage to resolve, often without clear information on when this will occur. This uncertainty is particularly pronounced in long queues, leading to frustration and inefficiencies. Furthermore, once the blockage is cleared, the time it takes for each driver to notice the change and react by starting their vehicle significantly delays the overall resolution of the traffic jam. This sequential reaction amplifies the duration required to restore normal traffic flow.

Within this context, there is still a need for an improved method to enable faster and more efficient vehicle departures in such scenarios.

### SUMMARY

It is therefore provided a method implemented by vehicles each equipped with a respective traffic system and optionally a respective start-stop system. The traffic systems of the vehicles are configured for sending and receiving messages to and from each other. The vehicles are stopped due to a blockage. The method comprises, by each vehicle, detecting the blockage. The method comprises determining a first vehicle facing the blockage. The method comprises, by the determined first vehicle, determining that the blockage is removed, and sending, to each other vehicle, a message indicating that the blockage is removed. The method comprises, for each given vehicle receiving the message, performing at least one of the following two steps. A first step consists in warning a driver of the given vehicle that the blockage is removed. A second step consists in, when equipped with a start-stop system, starting the start-stop system of the given vehicle.

The method may comprise one or more of the following:
- The determined first vehicle comprises a start-stop system. The method further comprises, after the determining that the blockage is removed, starting the start-stop system of the determined first vehicle;
- At least a portion of the vehicles are stopped one behind the other to form a vehicle queue. The method comprises, by at least one vehicle stopped behind a vehicle ahead in the vehicle queue:
   o monitoring, using a sensor of the vehicle, an acceleration and/or a deactivation of brake lights of the vehicle ahead in the vehicle queue;
   o determining that the vehicle ahead in the vehicle queue is accelerating based on the monitored acceleration and/or deactivation of brake lights; and
   o performing at least one of:
      ▪ warning that the vehicle ahead is accelerating; and/or
      ▪ when equipped with a start-stop system, starting the start/stop system;
- The method further comprises, prior to the determining that the blockage is removed, and by the determined first vehicle:
   o detecting a type of the blockage; and
   o sending a message indicating the detected type of blockage to each other vehicle;
- The type of blockage is one of the following, but not exclusively:
   o a red traffic light;
   o a traffic jam;
   o a railway crossing;
   o an intersection; or
   o an accident;
- The message indicating the detected type of blockage further includes information about the blockage;
- The method further comprises, by at least one vehicle receiving the message including information about the blockage:
   ∘ estimating the time until the blockage removal based on the received information; and
   ∘ checking for one or more alternative roads according to the estimated time;
- The checking for the one or more alternative roads according to the estimated time comprises:
   o determining a time to take a detour to avoid passing the blockage; and
   o when the estimated time until the blockage removal exceeds the time to take the detour, recommending to take the detour;
- The method further comprises, determining a respective distance between each vehicle and the blockage. The starting of each start-stop system is performed with a respective delay that is function of the respective distance determined between the vehicle comprising the start-stop system and the blockage;
- The method determining that the blockage is removed comprises determining that an object inducing the blockage is no longer present;
- The blockage is induced by a traffic light. The determining that the blockage is removed is performed by monitoring a state of the traffic light;
- The blockage is induced by an intersection. The determining that the blockage is removed is performed by detecting that a conductor of the determined first vehicle has manually decided to restart;
- The determined first vehicle is driving on a first road leading to an intersection with a second road. The message is also sent to at least one vehicle driving on the second road;
- The determined first vehicle is driving in a first lane of the road leading to the blockage. The message is also sent to at least one vehicle driving in a second adjacent lane of the road leading to the blockage; and/or
- The traffic systems use the V2V and/or V2X communication technology.

It is further provided a computer program comprising instructions which, when executed by a traffic system of a vehicle, cause the traffic system to participate in the carrying out of the method.

It is further provided a computer readable storage medium having recorded thereon the computer program.

It is further provided a traffic system comprising a processor coupled to a memory and a graphical user interface, the memory having recorded thereon the computer program.

### BRIEF DESCRIPTION OF THE DRAWINGS

Non-limiting examples will now be described in reference to the accompanying drawings, where:
- FIGs. 1 to 3 show flowcharts of examples of the method;
- FIGs. 4 and 5 illustrate two examples of implementation of the method; and
- FIG. 6 shows an example of the traffic system.

### DETAILED DESCRIPTION

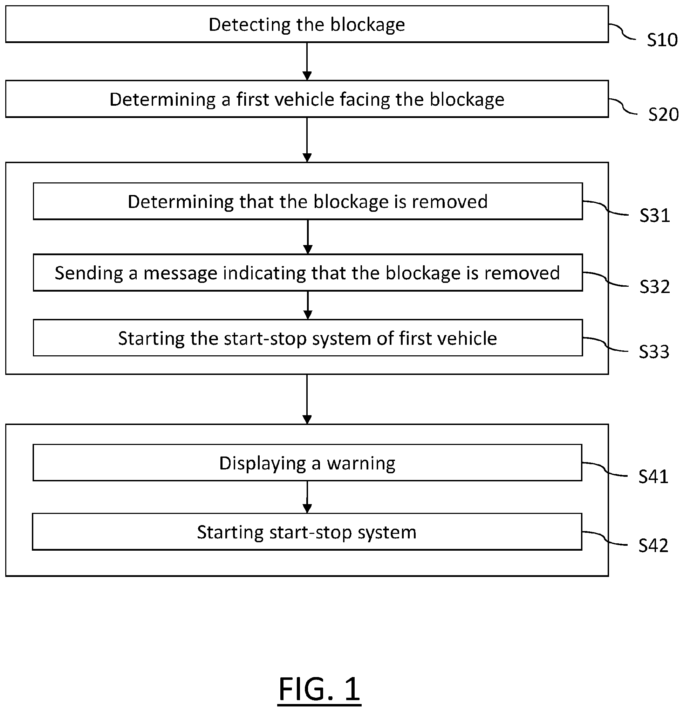

With reference to the flowchart of FIG. 1, it is proposed a method implemented by vehicles each equipped with a respective traffic system and optionally a respective start-stop system. The traffic systems of the vehicles are configured for sending and receiving messages to and from each other. The vehicles are stopped due to a blockage. The method comprises, by each vehicle, detecting S10 the blockage. The method comprises determining S20 a first vehicle facing the blockage. The method comprises, by the determined first vehicle, determining S31 that the blockage is removed, and sending S32, to each other vehicle, a message indicating that the blockage is removed. The method comprises, for each given vehicle receiving the message, performing at least one of the following two steps. A first step consists in warning S41 a driver of the given vehicle that the blockage is removed. A second step consists in, when equipped with a start-stop system, starting S42 the start-stop system of the given vehicle.

Such a method improves vehicle departure once the blockage has been removed.

Notably, the method improves traffic management by addressing delays associated with vehicles restarting after a blockage. By enabling the first vehicle facing the blockage to detect when the blockage is removed and automatically notify other stopped vehicles, the method allows for a system in which vehicles can operate more autonomously in such scenarios. In particular, this eliminates the need for drivers to rely on visual cues or assumptions, ensuring a faster and more synchronized response across the queue. Consequently, vehicles depart more quickly and in a more coordinated manner, significantly reducing the overall duration of traffic jams. Additionally, the method further minimizes start-up delays by automatically activating start/stop systems in equipped vehicles once the blockage is removed. Beyond reducing traffic jam durations, the method enhances cooperation between vehicles, paving the way for more intelligent and collaborative traffic systems. It also improves road safety by eliminating the confusion that arises when drivers rely solely on visual cues. Finally, by minimizing idle times during such incidents, the method not only optimizes traffic flow efficiency but also contributes to reduced fuel consumption and lower emissions.

The method is implemented by vehicles equipped with traffic systems. This means that steps (or substantially all the steps) of the method are executed by the traffic systems of the vehicles, or any system alike. Thus, steps of the method are performed by the traffic systems of the vehicles, possibly fully automatically, or, semiautomatically. In particular, each step may be performed by the traffic system of each vehicle involved during this step. The vehicle(s) involved for each step are indicated below when each of the steps are presented independently in more detail. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the method is to perform each step with traffic system(s) adapted for this purpose. Each traffic system may comprise a processor coupled to a memory, and optionally a graphical user interface (GUI), e.g., a display on the dashboard visible to the driver. Each traffic system may also comprise means for sending and receiving messages (e.g. a transmitting and/or receiving antenna). The memory may have recorded thereon a computer program comprising instructions for performing each step of the method in which the vehicle equipped with the traffic system is involved. The memory is any hardware adapted for such storage.

The term "vehicle" refers to any type of motorized vehicle. This may include, but is not limited to, cars, trucks, buses, motorcycles, or electric vehicles. The vehicles involved are equipped with traffic systems configured for sending and receiving messages to and from each other. Traffic system(s) of one or more (e.g., all) of the vehicles involved may for example utilize Vehicle-to-Vehicle (V2V) communication, which enables direct data exchange between nearby vehicles, allowing them to share information by transmitting messages to one another. Alternatively, or in addition, traffic system(s) of one or more (e.g., all) of the vehicles involved may employ Vehicle-to-Everything (V2X) communication, which extends connectivity to infrastructure elements, such as traffic lights, road sensors, or centralized traffic management systems. V2X communication allows vehicles to receive real-time updates on traffic conditions or instructions from external sources. These communication technologies ensure robust and reliable communication, allowing vehicles to act in a coordinated and autonomous manner, thereby optimizing traffic flow and minimizing delays after the removal of the blockage.

Each vehicle involved may optionally be equipped with a respective start-stop system. In some implementations, all vehicles in the scenario may include this system; in others, only a subset of vehicles may be equipped with it, or none at all. A start-stop system is configured to automatically control the operation of a vehicle's engine, turning it off when the vehicle is stationary to conserve fuel and reduce emissions, and restarting it when needed. This system may be started to initiate the engine of equipped vehicles, enabling them to promptly resume movement after a blockage has been resolved. When such a start-stop system is started after the blockage is removed, it eliminates the typical delay associated with engine restart, allowing the vehicle, whose start-stop system has been restarted, to resume movement more quickly and contribute to a faster traffic flow.

The term "blockage" refers to any situation that obstructs the movement of vehicles, preventing them from continuing their journey as normal. The type of blockage may include, but is not limited to, the following: a red traffic light, which halts the flow of vehicles; a traffic jam, where vehicles are unable to move due to congestion; a railway crossing, where vehicles must stop to allow trains to pass; an intersection, where traffic is temporarily halted due to other vehicles or traffic signals; or an accident, which causes a temporary obstruction on the road. The blockage may affect one lane or multiple lanes simultaneously. For example, at an intersection, two lanes may be blocked due to heavy traffic, while on a highway, an entire set of lanes or even all lanes may be blocked due to an accident or construction work. On a multi-lane road, a blockage may occur in just one lane due to a broken-down vehicle, while the other lanes remain open. Similarly, a blockage could involve a ramp or entrance to a highway, where vehicles are forced to stop before merging.

"The blockage is removed" means that the cause of the obstruction has been resolved or no longer exists, allowing vehicles to continue their movement. In the case of a red traffic light, the blockage is removed when the light turns green, signaling the vehicles to proceed. For a traffic jam, the blockage is cleared as congestion subsides, either due to vehicles moving forward or the end of the traffic queue. At a railway crossing, the blockage is removed when the train has passed and the crossing gates are raised, enabling vehicles to pass through. In the case of an intersection, the blockage is cleared when the traffic light changes or when other vehicles or pedestrians clear the intersection, allowing vehicles to move again. Finally, for an accident, the blockage is removed when the incident is cleared from the road, either by removing the vehicles involved or by allowing traffic to bypass the scene. Once the blockage is removed, vehicles can resume movement.

The detection of the blockage S10 is now described for a single vehicle. However, these details apply to all vehicles involved in detecting the blockage. The detection of the blockage S10 may be performed in any manner. In examples, the vehicle may detect the presence of a blockage using its traffic system, for example by receiving and exchanging information with other vehicles or infrastructure elements. For example, the vehicle may receive a message indicating that a blockage has occurred from another vehicle already stopped in front of it, or from an infrastructure in the area of the blockage. Alternatively or additionally, the vehicle may detect the blockage through visual cues, such as observing stopped or slow-moving traffic ahead, a red traffic light, a railway crossing, or an accident. In that case, the vehicle may be equipped with one or more sensors, such as cameras or radar, that may be configured for detecting a blockage, e.g., by identifying obstructions on the road or monitoring traffic conditions. Alternatively yet, the detecting S10 of the blockage may be performed by the driver. For example, the driver may perform a given user interaction on the vehicle, thereby signifying that there is a blockage.

The determining S20 of the first vehicle facing the blockage is now discussed. The determined first vehicle faces the blockage, which means that there is no other vehicle between the said first vehicle and a source of the blockage, which may be a traffic light, an accident or an intersection. In other words, the determined first vehicle is the closest of all the vehicles equipped with a traffic system to the source of the blockage. It means that, in examples, when two vehicles face the source of the blockage (e.g., because they are travelling on the same road but in opposite directions), and only one of them is equipped with a traffic system, the determined first vehicle is the one equipped with the traffic system. It is also a vehicle able to determine when the blockage will be resolved. For example, when the vehicles are queued one behind the other, the first vehicle facing the blockage may for example be the first vehicle in the queue.

The determining S20 of the first vehicle may be performed in any manner. In examples, the determining S20 of the first vehicle may involve all vehicles. For example, after detecting S10 the blockage, each vehicle equipped with a traffic system may be configured for determining whether it is the first vehicle in front of the blockage or not. Each of these vehicles may for example be configured for determining whether it is behind another vehicle or not. To determine whether it is behind another vehicle or not, each vehicle may, for example, be configured to detect signs of another vehicle ahead (such as by detecting a vehicle-like shape or headlights on). When it is in front of another vehicle, the vehicle may deduce that it is not the first vehicle facing the blockage. Alternatively, the vehicle may deduce that it is the first vehicle facing the blockage. The determining S20 of the first vehicle facing the blockage may be performed at the same time the blockage is detected S10 by each vehicle. For example, each vehicle detecting the blockage by determining that another vehicle in front is stopped, or by receiving a message indicating the blockage, may deduce that it is not the first facing the blockage (since the vehicle in front, or which sent the message, may be closer to the blockage). Alternatively, when at step S10 the vehicle detects that there is a blockage, and also the source of this blockage (e.g., the traffic light, the railway crossing, or the accident), it may deduce or not whether is it the first vehicle facing the blockage (e.g., by determining whether or not there is another vehicle in front of the blockage, e.g. by analyzing the data from the sensors used, using for example traffic sign recognition or object recognition).

After the determining S20 of the first vehicle, the method comprises steps S31 and S32 which are carried out only by the determined first vehicle. Step S31 consists in determining that the blockage is removed. The determining S31 of the blockage removal may be performed in any manner. For example, the determining S31 may comprise detecting that the source of the blockage has disappeared or is no longer preventing the passage of vehicles. For example, a sensor of the vehicle may capture images of the blockage, and the vehicle may determine that the blockage is removed when it disappears from the captured images (e.g., using image analysis, for example implementing traffic sign recognition or object recognition). The determining S31 of the blockage removal may depend on the type of blockage. For example, when the blockage is induced by an object (e.g., a barrier of a railway crossing, an accident or a tree on the road), the determining that the blockage is removed may comprise determining that this object is no longer present (e.g., on the captured images). Alternatively, when the blockage is induced by a traffic light, the determining that the blockage is removed may be performed by monitoring a state (e.g., red, orange or green) of the traffic light. When the state of the traffic light changes (e.g., to green), the first vehicle may determine that the blockage is removed. Alternatively, the determining S31 may be triggered by an action on the part of the driver of the first vehicle. For example, when the blockage is induced by an intersection, the determining that the blockage is removed may be performed by detecting that the driver of the determined first vehicle has manually decided to restart (or press a given button).

After the determining S31 the blockage removal, the first vehicle sends a message indicating that the blockage is removed to each other vehicle. In particular, the first vehicle sends a message to each other vehicle that is stopped due to the blockage and is equipped with a traffic system to receive the said message. The first vehicle may, for example, transmit a message around it that other vehicles around it may receive and read. The message may be sent by the traffic system of the first vehicle, and may be received by traffic system(s) of other vehicle(s).

After receiving the said message, each vehicle other than the first may perform one or more of the steps S41 and S42. It means that each vehicle involved may perform either or both of these two steps. When performing step S41, the vehicle provides a warning to the driver to indicate that the blockage has been removed. This warning may be in the form of visual signals, such as a flashing light or a notification on the vehicle's dashboard, or audible alerts, such as a sound or a spoken message, to ensure the driver is aware and can resume driving without delay. Step S42 is performed by vehicle equipped with a start-stop system only. When performing step S42, the start-stop system of the vehicle is activated (or started) to restart the engine of the vehicle. This action may be automatically triggered after the receiving of the said message, allowing the engine to start without delay, thereby enabling the vehicle to resume movement more quickly. In examples, when the first vehicle facing the blockage is equipped with a start-stop system, it may automatically be started after the determining S31 of the blockage removal. This also enables the first vehicle to resume movement more quickly. In examples, the method may delay the start of the start-stop automation system depending on the distance to the first vehicle and/or blockage to have more fuel saving. This is explained in more detail below.

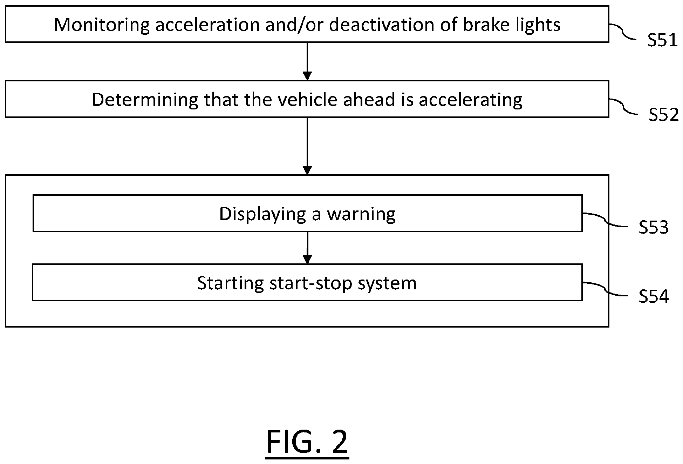

In examples, at least a portion (e.g., all) of the vehicles are stopped one behind the other to form a vehicle queue. In that case, at least one of these vehicles may perform the following steps S51 to S54 illustrated in FIG. 2. These steps may be performed by one or more vehicles not equipped with a traffic system. In that case, these vehicles may not receive the message indicating that the blockage is removed. The following steps enable them to restart more quickly too, which ultimately means a quicker resolution of the blockage even in such a situation. In examples, these steps may also be performed by vehicles equipped with traffic systems also. In that case, it allows reducing the risk of not properly detecting the end of the blockage, for example in the event of non-reception of the message sent by the first vehicle, for example in the event of this message being blocked by an obstacle.

The execution of steps S51 to S54 by a given vehicle is now discussed in more detail. However, these details apply to any vehicle performing these steps. The vehicle executing steps S51 to S54 is not the first vehicle facing the blockage, and is stopped behind another vehicle in the queue. This another vehicle ahead in the queue is hereinafter referred to as "vehicle ahead". In step S51, the vehicle monitors the acceleration and/or the deactivation of brake lights of this vehicle ahead. This step S51 may be performed continuously, for example since the vehicle has stopped and/or detected the blockage. The monitoring is performed using a sensor of the vehicle. The vehicle may monitor the acceleration of the vehicle ahead or the deactivation of its brake lights, or both. In the latter case, the acceleration of the vehicle ahead may be determined S52 based on the monitoring of both values (for example, the value of one may be used to confirm the value of the other). The vehicle may comprise a sensor for monitoring the acceleration of the vehicle ahead or the deactivation of its brake lights. When monitoring both acceleration and deactivation of brake lights, the vehicle may comprise two sensors (one for each value), or a single sensor configured for performing both operations. For monitoring the acceleration of the vehicle ahead, the sensor may be configured for monitoring the distance with the vehicle ahead. Based on the determined distance, the vehicle may then determine S52 whether the vehicle ahead is accelerating (e.g., it may deduce the acceleration of the vehicle ahead when the determined distance increases with time). For monitoring the deactivation of the brake lights, the sensor may capture real-time images of the vehicle in front, and the vehicle may determine S52 from these images whether brake lights are switched off or not (by image analysis, for example). In examples, the vehicle may analyze the velocity/movement profile of the vehicles ahead for example using radar, front camera or LiDAR technology. Furthermore, the braking lights (as mentioned) may also be analyzed by the vehicle. Alternatively, the vehicle ahead may be configured for monitoring its speed/longitudinal acceleration and/or brake pedal signals, and may be configured to share them via V2V to the traffic system of the vehicle, which may in turn deduce the acceleration and/or the deactivation of brake lights of the vehicle ahead.

The determining S52 of the acceleration may be performed during the monitoring S51 of the vehicle ahead. Step S52 may comprise analyzing the successive data (e.g., images or distances) captured in real time by the sensor to continuously determine whether or not the vehicle ahead is accelerating. Once the acceleration of the vehicle ahead has been determined, the vehicle may execute at least one of steps S53 and S54. This means the vehicle may perform either or both of these steps.

Steps S53 (warning the driver) and S54 (starting the start-stop system) correspond to steps S41 and S42, which are executed by each vehicle receiving a message from the first vehicle. The same details and explanations discussed earlier for steps S41 and S42 therefore also apply to steps S53 and S54, which are performed by the vehicle monitoring the acceleration and/or deactivation of brake lights.

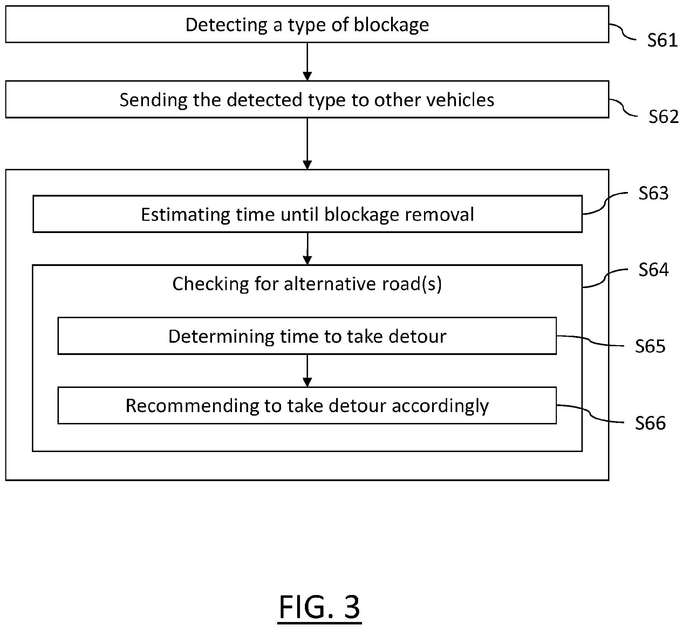

In examples, the first vehicle may also detect S61 the type of blockage and sends S62 it to the other vehicles, which may in turn perform additional operations S63 to S66. These steps are discussed with reference to FIG. 3.

The first vehicle facing the blockage may detect S61 the type of blockage. The detecting S61 of the type of blockage may be performed in any manner. For example, the first vehicle can deduce the type of blockage from sensor data. The sensor data may include images of the environment, and the vehicle may be configured to analyze these images to deduce the type of blockage (e.g., using traffic sign recognition or object recognition). The vehicle may have stored a list of blockage types, and may deduce the type of blockage from this list, for example according to the most likely in this list based on measured sensor data. For example, when a sensor detects a red light, the first vehicle may deduce that the cause of the blockage is a red light. The list of blockage types may include a red traffic light, a traffic jam, a railway crossing, an intersection and an accident.

After detecting S61 the blockage type, the first vehicle may send S62 a message indicating the detected type to each other vehicle equipped with a traffic system. The sending S62 of the message indicating the detected type may be performed in the same way as the sending S32 of the message indicating that the blockage is removed. The same details indicated above for step S32 therefore apply in the same way to step S62. The message sent by the first vehicle may include a code associated with a type of blockage, and each vehicle receiving this code may deduce the corresponding type of blockage from a table referencing the types of blockage and their associated codes (e.g., stored in memory by each vehicle).

In examples, the message indicating the detected type of blockage may further include information about the blockage. This additional information may encompass specifics such as the exact location of the blockage, its estimated duration, and its cause (e.g., whether it is due to an accident, construction work, a stopped vehicle, or another reason). Including such information allows for a more comprehensive understanding of the situation by nearby vehicles or traffic management systems. For example, vehicles receiving the message may use this data to adjust their routes, driving behavior, or timing decisions more effectively. Moreover, if the blockage involves dynamic factors, such as a temporarily stopped vehicle that might start moving soon, the message may also include real-time updates on these conditions. This additional context enhances the efficiency of traffic flow and improves the ability of vehicles and drivers to respond to unexpected situations.

In examples, at least one vehicle receiving this message containing information about the blockage may use this information to make intelligent decisions to optimize its route. For example, the vehicle may use this information for determining whether it is preferable or not to make a detour. In that case, the vehicle may first estimate S63 the time (or duration, expressed in minutes for example) remaining until the blockage is removal, based on the detailed information included in the message, such as the type, cause, and anticipated resolution time of the blockage. This estimation may leverage historical data or real-time updates to provide a reliable estimate. For example, a reported accident might have an average clearance time of 15 minutes, whereas planned construction may include a predefined duration. A red traffic light may have a shorter resolution time. The estimation S63 may also consider the distance to the location of the blockage (e.g., when such information is included in the message). In examples, for a traffic light, the estimation S63 may comprise analyzing the time taken for one full cycle (i.e. the time taken for the light to turn red, then green, then red), and based on this, estimating the total waiting time (for cars in queue placed at N, N+1, N+2, and so on).

Next, the vehicle performs step S64, checking for one or more alternative routes based on the estimated time until the blockage is removed. This step may comprise querying map data or a navigation system to identify viable detours. Each route may be evaluated using criteria such as total travel time, distance, and current traffic conditions, which can be obtained through real-time data sources (e.g., V2X communications or third-party traffic services). The vehicle then determines (S65) the time required to take a detour to avoid the blockage, based on the assessment of the alternative routes identified.

For example, the vehicle may select the most efficient alternative route and calculate the time needed to follow it. If the estimated time for the blockage removal (calculated in step S63) exceeds the time required for the alternative route, the vehicle may proceed with step S66, recommending the detour. This recommendation may be presented to the driver or automatically implemented in the navigation system. If no suitable alternative is found, the vehicle may suggest staying on the current route while continuing to monitor the status of the blockage.

In examples, each vehicle equipped with a start-stop system may be configured to determine its distance from the blockage. This distance may be calculated based on the location of the blockage, provided this information is included in the message transmitted by the first vehicle. The message may contain precise coordinates or a general indication of the blockage's position, allowing each receiving vehicle to deduce its own relative distance.

Using this distance, the start-stop system of each vehicle may be started with a respective delay which is function (e.g., proportional) to the determined distance. This ensures that vehicles farther from the blockage are not unnecessarily activated too early, avoiding inefficiencies caused by premature restarting of engines. The delay may increase with distance to account for the natural lag caused by vehicles ahead starting up sequentially. For example, a vehicle located 50 meters from the blockage may start after a shorter delay than one located 150 meters away. This staggered activation also contributes to reducing unnecessary fuel consumption and ensuring a smoother flow of traffic once the blockage is removed.

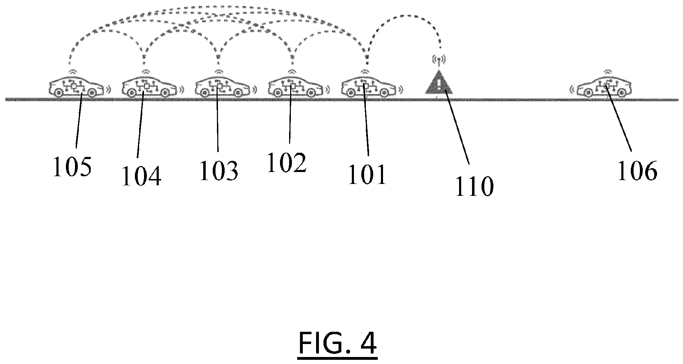

With reference to FIGs. 4 to 6, examples of implementation of the method are now presented.

FIG. 4 illustrates a first example of implementation of the method. In this first example, five vehicles 101, 102, 203, 204, 205 are stopped one behind the other due to a blockage 110, forming a queue of vehicles. The road on which they are travelling has two directions of travel, and another vehicle 106 is travelling in the opposite direction. Vehicles 101, 102, 203, 204, 205 may for example travel on a first lane of the road leading to the blockage, and the vehicle 106 may travel on a second adjacent lane of the road (in the opposite direction). Alternatively, the blockage may be located at an intersection of two roads: a first on which vehicles 101, 102, 203, 204, 205 may travel and a second on which vehicle 106 may travel. Vehicle 106 may be involved in the method if it is also stopped due to the same blockage 110 (e.g., its lane is also affected by the same blockage 110), and for example a queue starts to form behind this vehicle 106 as well.

In this first situation, each of the vehicles involved 101, 102, 103, 104, 105, 106 is equipped with a respective traffic system. The traffic systems of the vehicles are configured for sending and receiving messages to and from each other. One or more of these vehicles are each also equipped with a respective start-stop system. The method comprises, by each vehicle, detecting the blockage 110. The first vehicle 101 may, for example, detect the blockage (such as an obstruction on the road) using a sensor located at the front of the car, or may receive a message from an infrastructure (for example, a traffic light) indicating, for example, that the light is red. The vehicle 106 travelling in opposite direction may detect the blockage similarly than the first vehicle 101. Other vehicles behind 102, 103, 104, 105 are not facing the blockage, and therefore detect it differently. For example, they may detect that the vehicle in front of it is stopped.

After the detecting of the blockage by each vehicle, the method comprises determining S20 a first vehicle facing the blockage. In the present case, the determined first vehicle is vehicle 101, which is first in line and faces the blockage 110. Indeed, vehicle 101 is the closest to the blockage and comprises a traffic system. During this step S20, each vehicle equipped with a traffic system may, for example, determine whether it is facing another vehicle or the obstacle. If it is facing another vehicle (as vehicles 102, 103, 104 and 105 in this example), it may determine that it is not the first vehicle to face the blockage. Alternatively, it may deduce that it is the first, and perform steps S31 and S32.

After the determining S20 of the first vehicle facing the blockage, the method comprises, by the determined first vehicle 101, determining S31 that the blockage is removed. For example, the first vehicle may detect that the obstruction on the road is no longer present, or may receive a message from the said infrastructure indicating that the light is green. In that case, immediately after that, the first vehicle sends S32, to each other vehicle 102, 103, 104, 105, a message indicating that the blockage is removed. The first vehicle 101 may emit the message around it, and other vehicles 102, 103, 104, 105, because of their proximity to the first vehicle 101, may each receive this message. In examples, the message may also be sent to the vehicle 106 driving on the second road or lane.

After receiving the said message emitted by the first vehicle, each of the vehicles 102, 103, 104, 105 (optionally 106) may perform the following steps. A first step consists in warning S41 the driver of the vehicle that the blockage is removed. Each of the vehicles 102, 103, 104, 105 (optionally 106) may, for example, comprise a display on the dashboard, on which a specific alert may be displayed. A second step consists in, when equipped with a start-stop system, starting S42 the start-stop system of the vehicle. For example, the vehicles 102 and 104 may be equipped with a start-stop system. In that case, the start-stop system of these vehicles 102 and 104 may be started, meaning that the engine of these vehicles is automatically started after the blockage removal. In examples, the start-stop system of these vehicles may be started with a delay that is a function (e.g. proportional) of the distance from the blockage. For example, the start-stop system of vehicle 102 may be started before that of vehicle 104, the latter normally accelerating later.

In examples, the first vehicle 101 may also detect the type of blockage, and send a message indicating the detected type of blockage (as well as any other information about the blockage) to each other vehicles 102, 103, 104, 105 (optionally 106). This message may be sent before the message indicating that the blockage is removed. This enables other vehicles, for example, to assess whether it would be worthwhile to consider alternative routes (if the blockage is very long, for example). For example, each of these vehicles may estimate S63 the time until the blockage removal based on the received information, and check S64 for one or more alternative roads according to the estimated time. To do so, each vehicle may determine S65 the time required to make a detour in order to avoid passing the blockage (for example, by going back in the opposite direction in the example shown). Then, when the estimated time until the blockage removal exceeds the time to take the detour, each vehicle may recommend S66 the driver to take the detour.

In the present example, only the vehicle 101 has been considered as the first vehicle facing the blockage. However, in other examples, when several vehicles are facing the blockage as in the present situation (vehicles 101 and 106 are both facing the blockage 110), each of these vehicles may act as the determined first vehicle, and performs these steps S31 and S32 for warning other vehicles of the blockage removal. For example, when a queue begins to form behind vehicle 106 as well, vehicle 106 may act like vehicle 101 and perform steps S31 and S32 to warn other vehicles waiting behind it of the blockage removal.

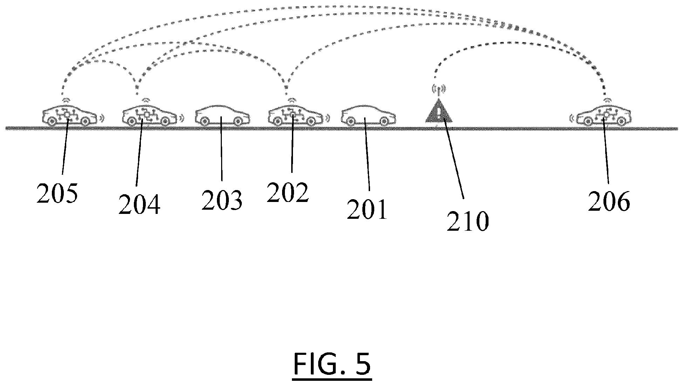

FIG. 5 illustrates a second example of implementation of the method. This second example differs from the first in that some of the vehicles in the queue do not include a traffic system. As indicated above for the first situation, vehicles 201 to 205 are stopped one behind the other due to the blockage 210, forming a queue of vehicles, and the other vehicle 206 comes from the opposite direction. For example, the road on which they are travelling has two directions of travel, and the vehicle 106 is coming in the opposite direction. Vehicles 201 to 205 may for example travel on a first lane of the road leading to the blockage, and the vehicle 206 may travel on a second adjacent lane of the road (in the opposite direction). Alternatively, the blockage may be located at an intersection of two roads: a first on which vehicles 201 to 205 may travel and a second on which vehicle 206 may travel.

In this second implementation, the vehicle 201 first in line and facing the blockage does not include a traffic system, and only vehicle 206 facing the blockage includes a traffic system. Step S31 of determining the blockage removal and step S32 of sending a message to the other vehicles 202, 204 and 205 are therefore performed by the other vehicle 206 in this second example. Therefore, vehicles coming from the opposite direction (such as vehicle 206 in this example) can also detect blockages which affect the vehicles facing the blockage (such as vehicles 201 to 205 in this example).

After receiving the said message emitted by vehicle 206, each of the vehicles 202, 204 and 205 may perform the following steps. A first step consists in warning S41 the driver of the vehicle that the blockage is removed. Each of the vehicles 202, 204 and 205 may, for example, comprise a display on the dashboard, on which a specific alert may be displayed. A second step consists in, when equipped with a start-stop system, starting S42 the start-stop system of the vehicle. For example, the vehicles 202 and 204 may be equipped with a start-stop system. In that case, the start-stop system of these vehicles 202 and 204 may be started, meaning that the engine of these vehicles is automatically started after the blockage removal. In examples, the start-stop system of these vehicles may be started with a delay as discussed in the first example.

Vehicle 203 is not equipped with a traffic system. It therefore does not receive the message sent by vehicle 206. However, vehicle 203 is configured for performing steps S51 to S54. The following steps enable it to restart more quickly too, which ultimately means a quicker resolution of the blockage even. In examples, these steps may also be performed by vehicles 202, 204 and 205, even if they are equipped with traffic systems. In that case, it allows reducing the risk of not properly detecting the end of the blockage, for example in the event of non-reception of the message sent by vehicle 206 (e.g., due to an obstacle).

The execution of steps S51 to S54 by vehicle 203 is now discussed in more detail. However, these details apply to any vehicle performing these steps. Vehicle 203 is not the first vehicle facing the blockage, and is stopped behind vehicle 202 in the queue. In step S51, vehicle 203 monitors the acceleration and/or the deactivation of brake lights of vehicle 202. The monitoring may be performed using one or more sensors of vehicle 203. Vehicle 203 may monitor the acceleration of the vehicle ahead 202 or the deactivation of its brake lights, or both. During the monitoring, vehicle 203 determines S52 whether vehicle 202 accelerates or not. It may deduce that vehicle 202 accelerates based on the monitored values (i.e., when it detects that it accelerates and/or when brake lights of vehicle 202 are deactivated. Once the acceleration of vehicle 202 has been determined, vehicle 203 executes at least one of steps S53 and S54. Steps S53 (warning the driver) and S54 (starting the start-stop system) correspond to steps S41 and S42, which are executed by the vehicles 202, 204 and 205 receiving the message from vehicle 206. The same details and explanations discussed earlier for steps S41 and S42 therefore also apply to steps S53 and S54 performed by vehicle 203 also.

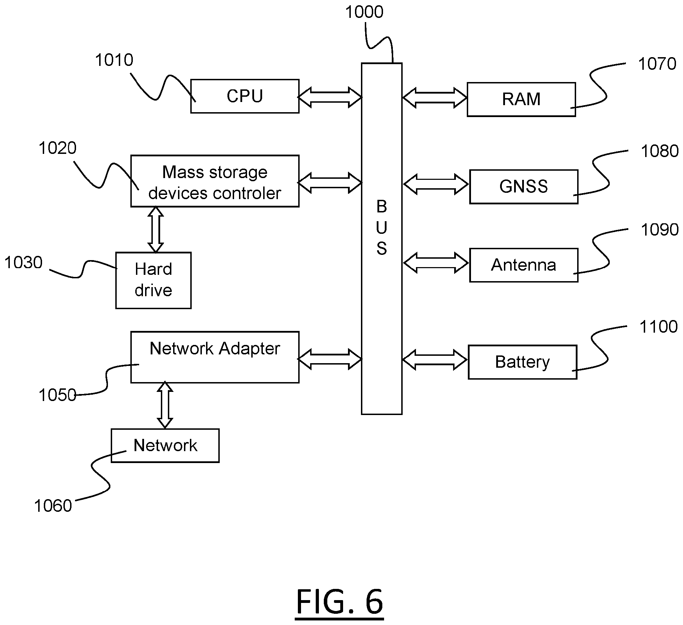

FIG. 6 shows an example of a traffic system.

The traffic system comprises a central processing unit (CPU) 1010 connected to an internal communication BUS 1000, a random access memory (RAM) 1070 also connected to the BUS. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A mobile communication unit such as a network adapter 1050 manages access to a network 1060.

The traffic system may further comprise or (so as to form a broader system) be coupled to a battery 1100 for alimentation, a satellite navigation (GNSS) unit 1080 which keeps track of the latitude and longitude values of the position (location) of the vehicle, and an external interface 1090 for mobile communications (e.g., a GSM, GPRS, Wi-Fi, LTE or 5G antenna) which may be used to send and receive messages to and from other vehicles equipped with similar traffic systems. The traffic system may also communicate with a display on the dashboard visible to the driver, e.g., for displaying the received messages and/or information they contain.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A method implemented by vehicles each equipped with a respective traffic system and optionally a respective start-stop system, the traffic systems of the vehicles being configured for sending and receiving messages to and from each other, the vehicles being stopped due to a blockage, the method comprises:
• detecting (S10), by each vehicle, the blockage;
• determining (S20) a first vehicle facing the blockage; and
• by the determined first vehicle:
o determining (S31) that the blockage is removed;
o sending (S32), to each other vehicle, a message indicating that the blockage is removed; and
• for each given vehicle receiving the message:
o warning (S41) a driver of the given vehicle that the blockage is removed; and/or
o when equipped with a start-stop system, starting (S42) the start-stop system of the given vehicle.

2. The method of claim 1, wherein the determined first vehicle comprises a start-stop system, the method further comprising, after the determining that the blockage is removed, starting (S33) the start-stop system of the determined first vehicle.

3. The method of claim 1 or 2, wherein at least a portion of the vehicles are stopped one behind the other to form a vehicle queue, the method comprises, by at least one vehicle stopped behind a vehicle ahead in the vehicle queue:
• monitoring (S51) an acceleration and/or a deactivation of brake lights of the vehicle ahead in the vehicle queue;
• determining (S52) that the vehicle ahead in the vehicle queue is accelerating based on the monitored acceleration and/or deactivation of brake lights; and
• performing at least one of:
o warning (S53) that the vehicle ahead is accelerating ; and/or
o when equipped with a start-stop system, starting (S54) the start/stop system.

4. The method of any one of claims 1 to 3, further comprising, prior to the determining that the blockage is removed, and by the determined first vehicle:
• detecting (S61) a type of the blockage; and
• sending (S62) a message indicating the detected type of blockage to each other vehicle.

5. The method of claim 4, wherein the type of blockage is one of the following, but not exclusively:
- a red traffic light;
- a traffic jam;
- a railway crossing;
- an intersection; or
- an accident.

6. The method of claim 4 or 5, wherein the message indicating the detected type of blockage further includes information about the blockage.

7. The method of claim 6, further comprising, by at least one vehicle receiving the message including information about the blockage:
• estimating (S63) the time until the blockage removal based on the received information; and
• checking (S64) for one or more alternative roads according to the estimated time.

8. The method of claim 7, wherein the checking for the one or more alternative roads according to the estimated time comprising:
• determining (S65) a time to take a detour to avoid passing the blockage; and
• when the estimated time until the blockage removal exceeds the time to take the detour, recommending (S66) to take the detour.

9. The method of any one of claims 1 to 8, further comprising, determining a respective distance between each vehicle and the blockage, the starting of each start-stop system being performed with a respective delay that is function of the respective distance determined between the vehicle comprising the start-stop system and the blockage.

10. The method of any one of claims 1 to 9, wherein the determining that the blockage is removed comprises determining that an object inducing the blockage is no longer present.

11. The method of any one of claims 1 to 10, wherein the blockage is induced by a traffic light, the determining that the blockage is removed being performed by monitoring a state of the traffic light.

12. The method of any one of claims 1 to 11, wherein the blockage is induced by an intersection, the determining that the blockage is removed being performed by detecting that a conductor of the determined first vehicle has manually decided to restart.

13. A computer program comprising instructions which, when executed by a traffic system of a vehicle, cause the traffic system to participate in the carrying out of the method of any of claims 1-12.

14. A computer readable storage medium having recorded thereon a computer program of claim 13.

15. A traffic system comprising a processor coupled to a memory, the memory having recorded thereon the computer program of claim 13.
